# FASCICULE DE BREVET EUROPEEN

(11) **EP 0 656 103 B1**
(45) Date de publication et mention de la délivrance du brevet: **26.08.1998**
(21) Numéro de dépôt: 94919736.2
(22) Date de dépôt: 20.06.1994
(51) Int. Cl.: F16G 3/02

(54) **DISPOSITIF DE JONCTIONNEMENT SOUPLE POUR BANDE TRANSPORTEUSE**
VORRICHTUNG ZUR BIEGSAMEN VERBINDUNG FÜR FÖRDERBÄNDER
FLEXIBLE JOINT DEVICE FOR CONVEYOR BELTS

(30) Priorité: 21.06.1993 FR 9307454
(43) Date de publication de la demande: 07.06.1995
(73) Titulaire: Aser, F-42405 Saint-Chamond (FR)
(72) Inventeur: JAKOB, Horst, F-30360 Deaux (FR)
(74) Mandataire: Simonnot, Bernard
(86) Numéro de dépôt international: FR9400741
(87) Numéro de publication internationale: WO9500774

(56) Documents cités:
- DE-A- 2 901 752
- FR-A- 917 596
- FR-A- 1 013 901
- FR-A- 1 065 983
- FR-A- 1 140 516
- FR-A- 1 195 056
- FR-A- 1 222 376
- FR-A- 2 055 625
- FR-A- 2 116 609

## Description

Les bandes transporteuses sont utilisées dans diverses industries pour le transport de matériaux ou de matières se présentant généralement, mais non nécessairement, en vrac. Ces bandes sont le plus souvent constituées par un matériau souple dotées d'une certaine élasticité au moins dans le sens longitudinal et elles nécessitent une jonction des deux extrémités pour constituer une bande sans fin qui passe autour de rouleaux dont l'un au moins est un rouleau moteur, l'autre étant généralement un rouleau fou, dit de renvoi.

En ce qui concerne les modes de jonctionnement de ces bandes transporteuses, on connaît jusqu'à présent deux familles principales.

Une première famille est constituée par les collages, ou la vulcanisation des extrémités de la bande transporteuse, lorsque celle-ci contient une forte proportion de caoutchouc. Les modalités de présentation de ces extrémités et les modalités de réalisation du collage, ou de la vulcanisation de ces extrémités, l'une avec l'autre, sont bien connues des spécialistes.

L'autre famille de modes de jonctionnement fait appel à des dispositifs de jonctionnement constitué par des séries d'agrafes métalliques rigides, en forme générale de U, qui comportent chacune deux pattes de fixation ainsi qu'un oeil dans leur partie concave intérieure en formant ainsi ce que l'on appelle un charnon, par analogie avec les charnières. Les pattes de fixation de ces agrafes rigides sont fixées à une extrémité de la bande transporteuse, l'une sur une des faces de l'extrémité de la bande transporteuse, l'autre sur l'autre face de l'extrémité de la bande transporteuse, au moyen de rivets ou au moyen de crampons, souvent des crampons doubles dont les extrémités libres pointues sont rabattues après avoir traversé, par des trous correspondants, l'une des pattes , la bande et l'autre patte, en dépassant de celle-ci.

La première famille de modes de jonctionnement souffre de l'inconvénient principal consistant en la durée des opérations qui nécessitent un arrêt assez long, allant jusqu'à 24 heures, et par ailleurs de la difficulté qui existe souvent dans des conditions d'exploitation difficiles (industries extractives, transport de matériaux, certaines industries de production) pour réaliser correctement la préparation des extrémités à coller ou à vulcaniser ainsi que l'opération de jonctionnement proprement dite. De plus ces jonctions ne sont pas déconnectables. La possibilité d'opérer une déconnexion est utile si l'on veut rallonger un dispositif de transport à bande, ce qui est souvent le cas dans les mines, les carrières ou les travaux publics, au fur et à mesure de l'avance du front de taille, des travaux de carrière ou des travaux publics. Le fait de pouvoir déconnecter facilement permet également le remplacement aisé d'un morceau de bande usé ou détérioré, les autres morceaux restant utilisables.

Dans le cas de la deuxième famille de modes de jonctionnement, les opérations sont plus rapides et nécessitent une préparation moins soignée des extrémités de la bande transporteuse. Cependant ces jonctions présentent de graves inconvénients consistant essentiellement dans deux problèmes. Le premier consiste dans le fait que l'axe de liaison et d'articulation est usé par les agrafes qui s'articulent sur lui et qui effectuent des rotations par rapport à lui lors du fonctionnement de la bande. Ceci est inévitable du fait de la conception même de ces dispositifs de jonctionnement. On a bien imaginé des palliatifs à ladite usure mais ou bien ceux-ci ne sont pas très efficaces, ou bien ils augmentent très sérieusement le prix de revient, tout en étant loin d'avoir une efficacité totale.

Le second problème rencontré avec les modes de jonctionnement de la seconde famille consiste dans la déchirure des extrémités de la bande causée par les pointes qui sont disposées assez prés du bout de l'extrémité des bandes. Du fait de leur rigidité, les pattes de fixation des agrafes doivent être courtes pour pouvoir accompagner tant bien que mal la courbure de la bande lorsque celle-ci passe sur un rouleau (moteur ou fou), ce qui oblige comme dit plus haut à disposer les pointes, ou les rivets, assez près de l'extrémité des bandes. De plus, du fait de cette rigidité, des tractions sévères sont exercées sur les pointes en raison du fait que le trajet de la patte qui est située du côté des rouleaux est plus court que le trajet de la patte qui est située du côté extérieur. Ces tractions sévères qui se reportent sur les pointes du fait de la rigidité des pattes de fixation ont pour effet de provoquer petit à petit la déchirure de la bande transporteuse par les tiges des rivets ou crampons qui la traversent et la défaillance de la jonction.

A cet égard, le document FR-A-1 013 901 propose de réaliser des agrafes souples en bande, par exemple en caoutchouc ou en matière plastique, comportant une armature intérieure constituée de câbles d'acier pouvant être guipé, ou de tissu, ces agrafes souples étant fixées à l'extrémité d'une bande transporteuse au moyen de rivets, ou par collage, ou par soudure.

Le document FR-A-1 222 376 propose de réaliser des segments de courroie de transmission interconnectables, munis à leurs extrémités de saillies, par exemple de crénaux, agencées de façon à pénétrer entre les saillies du segment adjacent, un organe d'assemblage étant engagé à travers les deux jeux de saillies engagées les unes dans les autres. Ces segments de courroie réalisés en une composition élastomère sont renforcées par des câblés parallèles longitudinaux non tissés disposés de façon à former, à chaque extrémité du segment, plusieurs organes d'accouplement perforés transversalement. En outre, l'acier constituant l'armature intérieure peut être remplacé par une matière textile : coton, rayonne, "Nylon" ou "Térylène".

Toutefois, il est clair qu'aucun des matériaux ci-dessus n'est élastique et ne permet de réaliser directement une armature intérieure élastique. Dans ces conditions, aucun des dispositifs de jonctionnement proposés dans ces deux brevets de l'art antérieur ne permet de résoudre les problèmes posés par le passage sur les rouleaux d'entraînement, intermédiaires, ou de renvoi. En particulier, ces documents ne prévoient pas de moyens propres à assurer l'élasticité des dispositifs de jonctionnement dans le sens longitudinal, considéré ici comme étant celui de la bande transporteuse sur laquelle est monté le dispositif de jonctionnement.

La présente invention a donc pour but de créer un dispositif de jonctionnement tel
- que le jonctionnement soit rapide ;
- que le dispositif de jonctionnement ne soit pas sujet à l'usure ;
- qu'il soit souple et élastique au passage de la bande sur les rouleaux de renvoi ;
- qu'il soit de préférence étanche ;
- qu'il ne provoque pas la déchirure de la bande aux points de fixation ;
- qu'il présente une surépaisseur minimum par rapport aux faces de la bande transporteuse, en étant de ce fait moins sensible aux racleurs utilisés pour débarrasser les bandes transporteuses des restes des matériaux transportés ;
- qu'il soit déconnectable.

On remarquera que les propriétés recherchées par l'invention pour le nouveau mode de jonctionnement sont des propriétés que l'on retrouve en partie dans les dispositifs de jonctionnement connus de la première famille connue et dans ceux de la seconde famille connue, mais que les dispositifs de l'une et de l'autre famille connues ne présentent pas l'ensemble de ces propriétés qui sont incompatibles au sein d'une même famille connue.

Le problème ainsi posé est résolu au moyen d'un dispositif de jonctionnement pour bande transporteuse, constitué de deux demi-dispositifs de jonctionnement, chacun de ces demi dispositifs de jonctionnement présentant sur l'un de ses bords extérieurs une série d'éléments de liaison aménagés pour recevoir une tige de liaison, ou des tiges de liaison, enfilées dans le sens transversal alternativement dans un élément de liaison appartenant à un demi-dispositif de jonctionnement ; puis dans un élément de liaison appartenant à l'autre dispositif de jonctionnement, et ainsi de suite, les demi-dispositifs de jonctionnement ayant été rapprochés de façon à imbriquer les éléments de liaison appartenant à l'un des demi-dispositifs de jonctionnement avec les éléments de liaison appartenant à l'autre demi-dispositif de jonctionnement, et présentant sur son autre bord extérieur une paire d'ailes de fixation souples, disposées de manière à pouvoir laisser insérer entre elles une extrémité de bande transporteuse, lesdites ailes étant solidaires de la partie du demi-élément de jonctionnement qui porte les éléments de liaison sur son côté opposé, lesdits demi-dispositifs de jonctionnement étant réalisés dans une matière souple et élastique, et comportant une armature intérieure noyée dans cette matière souple et élastique, laquelle armature intérieure s'étend dans une première aile de fixation, entoure sur environ 180° les parties creuses des éléments de liaison servant de passage aux tiges de liaison, à une certaine distance de la surface de celles-ci, ou en affleurant ladite surface, puis s'étend dans l'autre aile de fixation, ledit dispositif de jonctionnement comportant une armature intérieure d'une souplesse et d'une élasticité du même ordre que celles de ladite matière, ladite armature étant conçue de manière à entourer les parties creuses des éléments de liaison servant de passages aux tiges de liaison, soit à une certaine distance de la surface de celles-ci soit en affleurant cette surface. Les parties creuses peuvent être chemisées par une bague ou douille en métal ou en matière plastique facilitant l'enfilage des tiges de liaison.

Selon une forme de réalisation préférée, chaque élément de liaison comporte un seul passage destiné à une tige de liaison, ce passage ayant une section transversale non ronde, par exemple une forme en "hippodrome", et la tige de liaison ayant une section transversale de forme complémentaire à un faible jeu prés. Le but de cette forme non ronde est d'éviter que le dispositif de jonctionnement fonctionne comme une charnière, comme c'est le cas dans les dispositifs comportant des agrafes rigides de l'art antérieur sujets de ce fait à une usure rapide. D'autres formes non rondes sont envisageables, pourvu qu'elles évitent que les éléments de liaison tournent par rapport à la tige de liaison au cours du fonctionnement de la bande transporteuse. Le fait que le dispositif de jonctionnement selon l'invention ne soit pas articulé au niveau des éléments de liaison se trouve avantageusement compensé par la souplesse et l'élasticité de la matière et par celle de l'armature entourant les passages.

Selon une autre forme de réalisation préférée chaque élément de liaison comporte deux ou plusieurs passages, la liaison étant obtenue au moyen de deux ou de plusieurs tiges de liaison. Dans ce cas, les tiges de liaison peuvent avoir une section transversale de forme ronde, aussi bien que non ronde, car la présence de deux tiges au moins évite l'effet de charnière, même avec des tiges de section transversale ronde. Les passages peuvent être décalés dans le sens longitudinal, ainsi que dans le sens perpendiculaire au plan général du dispositif de jonctionnement ; ils sont avantageusement entourés par des parties de l'armature du dispositif de jonctionnement, de façon à transmettre les tractions dans l'armature, et, partant, dans tout le dispositif de jonctionnement et dans la bande transporteuse solidarisée avec le dispositif de jonctionnement.

En ce qui concerne la solidarisation du dispositif de jonctionnement avec les extrémités de la bande transporteuse, l'invention prévoit que chaque demi-dispositif de jonctionnement comporte deux ailes dans lesquelles s'étend l'armature, une aile inférieure et une aile supérieure. Ces ailes, qui forment une seule pièce avec la partie du dispositif de jonctionnement comportant les éléments de liaison sont souples et élastiques, en particulier dans le sens longitudinal en raison de l'élasticité de la matière dont elles sont constituées, et de celle de l'armature. Pour la fixation desdites ailes sur une extrémité de la bande transporteuse, celles-ci sont disposées de part et d'autre de l'extrémité de la bande transporteuse qui se trouve ainsi placée entre les deux ailes. Des rivets, ou des crampons sont enfoncés dans des trous ménagés dans lesdites ailes de fixation en traversant l'extrémité de la bande transporteuse prise en sandwich entre les deux ailes de fixation. Les trous, avantageusement chemisés au moyen de rondelles, sont répartis sur les ailes de fixation de façon telle que les rivets ou crampons ne soient pas placés sur une même ligne longitudinale, ou s'ils le sont, qu'ils soient séparés par une distance importante. Il faut souligner que les ailes de dispositifs de jonctionnement selon l'invention, étant souples et s'étendant sur toute la largeur des dispositifs de jonctionnement peuvent s'étendre largement dans le sens longitudinal sans nuire au fonctionnement du dispositif. Ceci permet de placer les rivets ou crampons avec un écart important entre eux, ce qui est très différent du cas des agrafes rigides individuelles de l'art antérieur qui ont obligatoirement des pattes de fixation courtes et qui , malgré cela, du fait de leur rigidité, entraînent des déchirures de l'extrémité de la bande transporteuse, du fait de la différence de rayon, au passage du dispositif de jonctionnement sur les rouleaux de renvoi de la bande transporteuse, entre la face supérieure et la face inférieure du dispositif de jonctionnement. Les armatures sont avantageusement arrimées aux rondelles placées dans les trous servant au passage des rivets ou crampons pour la fixation des demi-dispositifs de jonctionnement. Ces rondelles peuvent être remplacées par des plaquettes trouées, en particulier aux extrémités libres des ailes. Ces plaquettes, auxquelles sont arrimées les armatures sont avantageusement repliées vers l'extérieur, de manière à former un rebord biseauté. Ces rebords biseautés sont utiles pour protéger les extrémités des ailes de l'attaque des racleurs utilisés pour évacuer les restes de matériau subsistant sur la bande transporteuse. En effet, sans ce rebord biseauté, c'est l'extrémité de l'aile qui, du fait de l'épaisseur de l'aile, fait saillie par rapport au plan de la surface correspondante de la bande transporteuse.

Diverses formes de réalisation de l'invention sont exposés ci-après, à titre d'exemples non limitatif, en correspondance avec le dessin dans lequel les mêmes pièces ou parties, ou des pièces ou parties analogues, portent les mêmes références dans toutes les figures.
La figure 1 représente, vu en coupe longitudinale, un dispositif de jonctionnement selon l'invention, sur la bande transporteuse, la figure la le montrant entièrement fixé et la figure 1b le montrant en cours de fixation,
la figure 2 représente, vu en coupe longitudinale, un dispositif de jonctionnement selon l'invention en train de passer sur un des rouleaux autour desquels est montée la bande transporteuse,
la figure 3, représente, vu en perspective de façon schématique, un mode de tissage de l'armature d'un dispositif de jonctionnement selon l'invention.
la figure 4 représente, de façon schématique, vu en perspective et partiellement en coupe longitudinale, un demi-dispositif d'une forme de réalisation de l'invention,
la figure 5 représente diverses formes de réalisation de tiges de liaison destinées à des dispositifs de jonctionnement selon l'invention, vues en perspective et en coupe partielle.
la figure 6 représente, en plan par le dessus, une vue "radiographique" d'un dispositif de jonctionnement selon l'invention faisant apparaître la structure de son armature intérieure.
la figure 7 représente en perspective et en écorché partiel un demi-dispositif de jonctionnement selon l'invention comportant des éléments de liaison à deux passages décalés dans le sens longitudinal,
la figure 8 représente, en coupe longitudinale un dispositif de jonctionnement selon l'invention connecté au moyen de deux tiges rondes,
la figure 9 représente, en coupe longitudinale un dispositif de jonctionnement selon l'invention connecté au moyen de quatre tiges rondes,
la figure 10 représente en perspective un demi-dispositif de jonctionnement selon l'invention constituant une partie d'un dispositif de jonctionnement étanche,
la figure 11 représente en coupe longitudinale un dispositif de jonctionnement selon l'invention selon la figure 10, connecté au moyen des tiges de liaison.

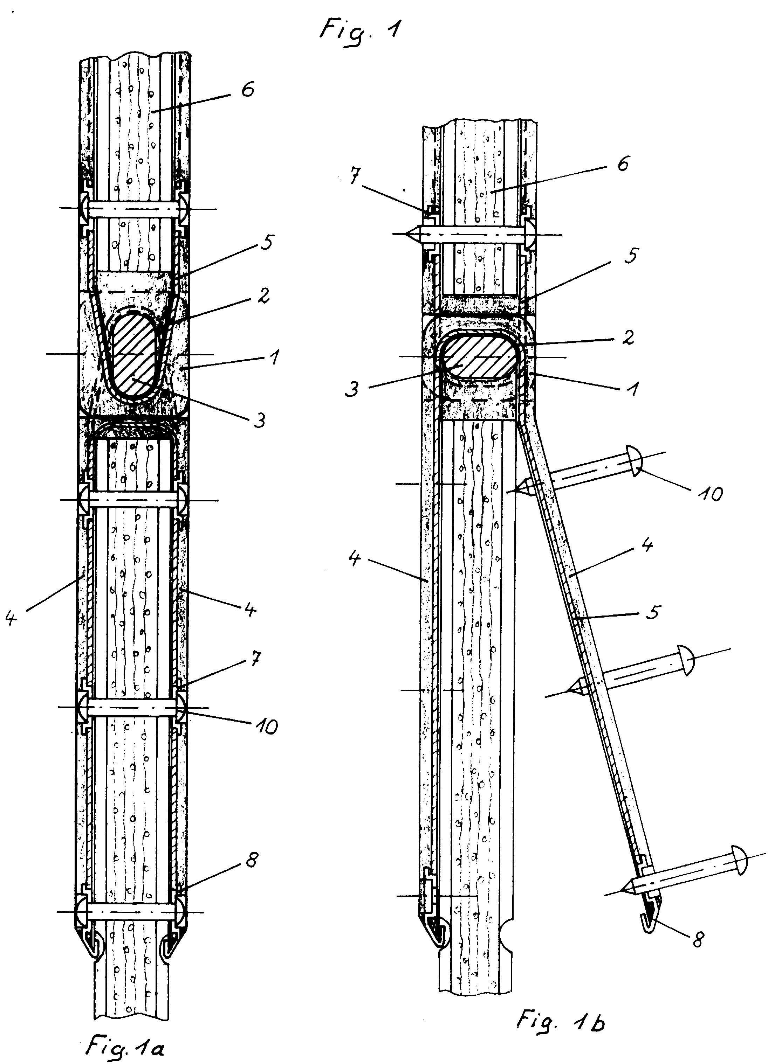

Dans le dispositif de jonctionnement de la figure 1 on remarque la tige de liaison 3 enfilée dans des passages 2 pratiqués dans les éléments de liaison 1, dont un seul est visible, des demi-systèmes de jonctionnement comportant chacun deux ailes 4 disposées chacune contre une face de l'une des extrémités d'une bande transporteuse, et fixées au moyen de rivets 10 traversant successivement une aile, la bande transporteuse 6 et l'autre aile. Les demi-dispositifs de jonctionnement comportent une armacure souple et élastique 5 qui est reliée aux rondelles 7, ou aux plaquettes 8, enchâssées dans les ailes et destinées au passage des rivets ou crampons de fixation des ailes sur l'extrémité de la bande transporteuse. La section transversale de la tige de liaison 3 a une forme oblongue en "hippodrome", c'est-à-dire non ronde.

Comme expliqué plus haut, le rôle de cette tige de liaison 3 n'est pas, comme dans les dispositifs connus, de servir la fois à la liaison et à l'articulation des demi-dispositifs de jonctionnement. Ici la tige sert uniquement à la liaison. L'adaptation du dispositif à la forme cylindrique des rouleaux sur lesquels passe la bande transporteuse à laquelle il est fixé se fait grâce à la souplesse et à l'élasticité des ailes de fixation du dispositif et des éléments de liaison.

Dans tout l'exposé, sens longitudinal et sens transversal signifient respectivement le sens de la longueur de la bande transporteuse et le sens de la largeur de celle-ci, même lorsque les expressions sont appliquées au dispositif et même lorsque celui-ci est nu, considéré comme s'il était déjà fixé sur la bande transporteuse. Il faut remarquer que pour la clarté du dessin les ailes ont été dessinées avec une épaisseur volontairement supérieure à celle qu'impliquerait l'échelle, par rapport à l'épaisseur de la bande. Dans la réalité, ces ailes, renforcées par une armature et munies d'un grand nombre de trous de fixation largement répartis, sont beaucoup plus minces, sans que cela nuise à leur résistance lors du fonctionnement du dispositif.

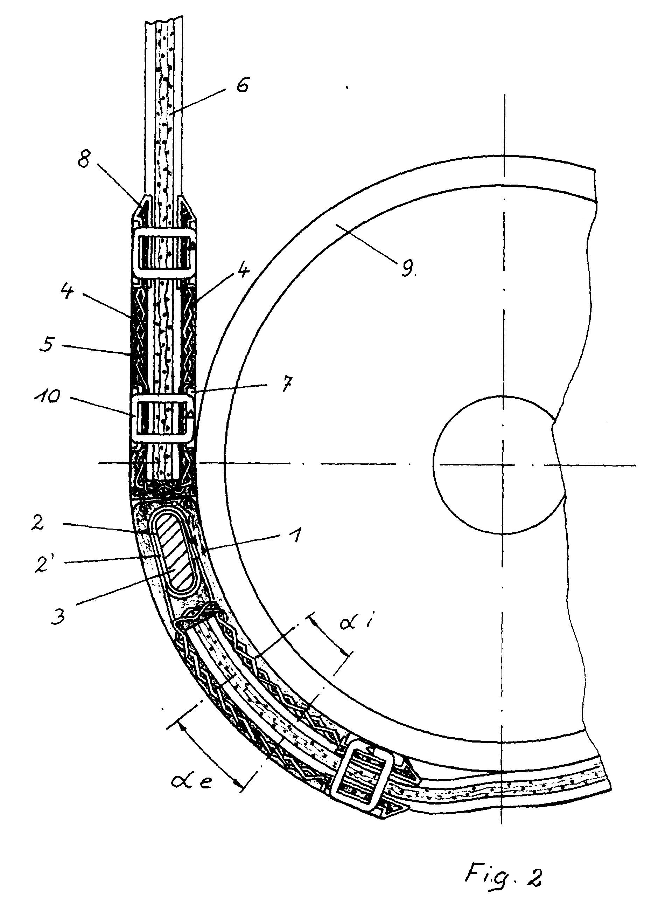

La figure 2 illustre deux caractéristiques des dispositifs de l'invention. Un dispositif de jonctionnement selon l'invention y est représenté fixé aux extrémités d'une bande transporteuse, lors de son passage sur un rouleau porteur 9. La première caractéristique illustrée est la souplesse du dispositif, en particulier celle des ailes 4 qui suivent la forme cylindrique du rouleau 9, exactement comme le fait la bande transporteuse 6. La seconde caractéristique illustrée est l'élasticité des ailes 4 dans le sens longitudinal. En effet l'arc extérieur αₑ a une longueur légèrement supérieure celle de l'arc intérieur αᵢ, cette différence étant causée par la différence de rayon qui est égale à l'épaisseur de la bande augmentée de celle des deux ailes. Cette différence de longueur des arcs extérieur et intérieur entraînerait, si les ailes 4 n'était pas élastiques dans le sens longitudinal, une contrainte de traction qui se répercuterait sur les crampons, ou rivets, de fixation 10 en entraînant à la longue la détérioration des ailes et de la bande transporteuse. Après le passage du rouleau 9, naturellement, du fait de l'élasticité des ailes 4, l'aile extérieure reprend sa longueur normale, identique à celle de l'aile intérieure, la contrainte de traction ayant disparu. On comprend ainsi mieux la raison de la présence d'une armature interne 5 présentant une élasticité suffisante pour absorber la différence de longueur qui se produit au passage des rouleaux 9, ou en d'autres circonstances analogues. Il est souhaitable que l'élasticité des armatures 5 et celle de la matière constituant le dispositif soient identiques ou au moins voisines pour obtenir une adhésion durable de l'armature et de la matière.

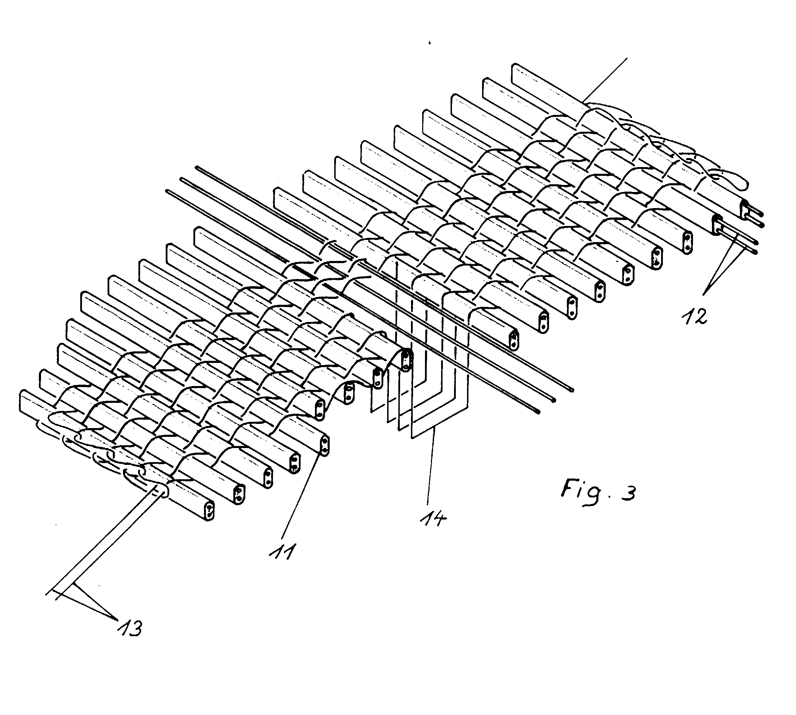

La figure 3 représente une forme de réalisation d'armature tissée élastique, destinée à être incorporée dans un dispositif de jonctionnement selon l'invention.

On remarque les fils de chaîne 11. Ces fils de chaîne 11 sont constitués par un ou plusieurs fils internes 12 (ici deux) enrobés dans une matière élastique. Les fils de trame 13 présentent une certaine élasticité dans le sens de leur longueur et sont tissés de façon lâche, avec embubage.

On comprendra qu'un tel tissu, soumis a une traction dans le sens transversal du tissu (qui est le sens longitudinal du dispositif dans lequel il est incorporé) s'allongera élastiquement du fait de l'élasticité des fils de trame 13 et de celle de la matière élastique d'enrobage des fils de chaîne 11, qui, soumise à la pression des fils de trame 13, tires, tendant à réduire l'amplitude de leurs sinuosités, se comprime momentanément

Lorsque la traction cesse, le tissu reprend sa longueur initiale. On remarquera que le tissu présente une texture spéciale dans sa partie centrale. Cette texture, caractérisée par des boucles lâches 14 des fils de trame 13, est destinée à l'armature 5 des éléments de liaison des demi-dispositifs. On explique plus loin que ces boucles 14 sont rassemblées pour s'adapter à la forme des éléments de liaison 1. Bien entendu, comme dans toute représentation textile, les fils de chaîne 11 et les fils de trame 13 sont représentés avec des écarts entre eux bien plus importants qu'ils ne sont dans la réalité.

Cependant les armatures peuvent également être réalisees en un tissu tricoté, et même en un produit non tissé, présentant les propriétés d'élasticité nécessaires.

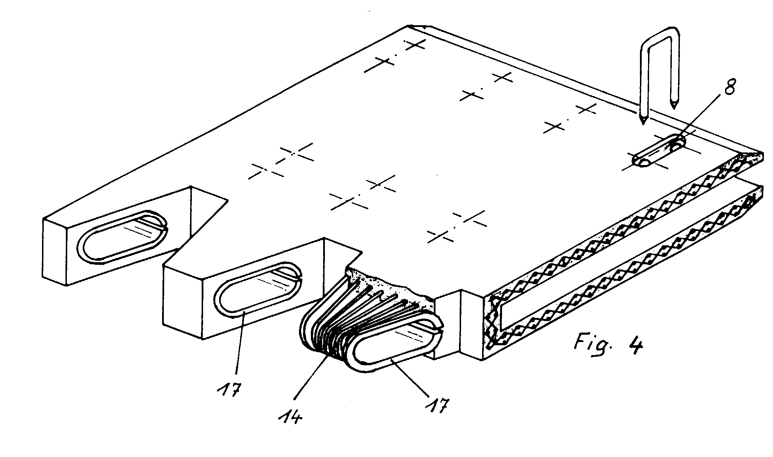

La figure 4 représente un demi-dispositif dont l'armature est constituée par un tissu élastique du genre représenté sur la figure 3, la fixation étant assurée là au moyen de crampons à deux pointes enfilés dans des plaquettes à deux trous reliées à l'armature et noyées dans les ailes. On remarque un élémént de liaison représenté en écorché faisant apparaître les boucles 14 du tissu rassemblées pour s'adapter à la forme trapézoïdale de l'élément de liaison, qui entourent une vague 17 dont la section transversale est en forme d'"hippodrome". Ces bagues 17 sont destinées à recevoir la tige de liaison qui traverse successivement alternativement une bague 17 appartenant à un élément de liaison 1 de la série d'éléments de liaison d'un demi-dispositif puis une bague 17 appartenant à un élément de liaison 1 faisant partie d'une série d'éléments de liaison de l'autre demi-dispositif et ainsi de suite. Ces bagues 17 sont réalisées en métal ou en matiere plastique. Elles ont pour but de renforcer l'interieur des passages et de faciliter l'enfilage de la tige de liaison. Il n'est pas nécessaire qu'elles soient annulaires, c'est-à-dire complètement fermées. D'ailleurs les bagues 17 représentées comportent une fente dans leur partie arrière.

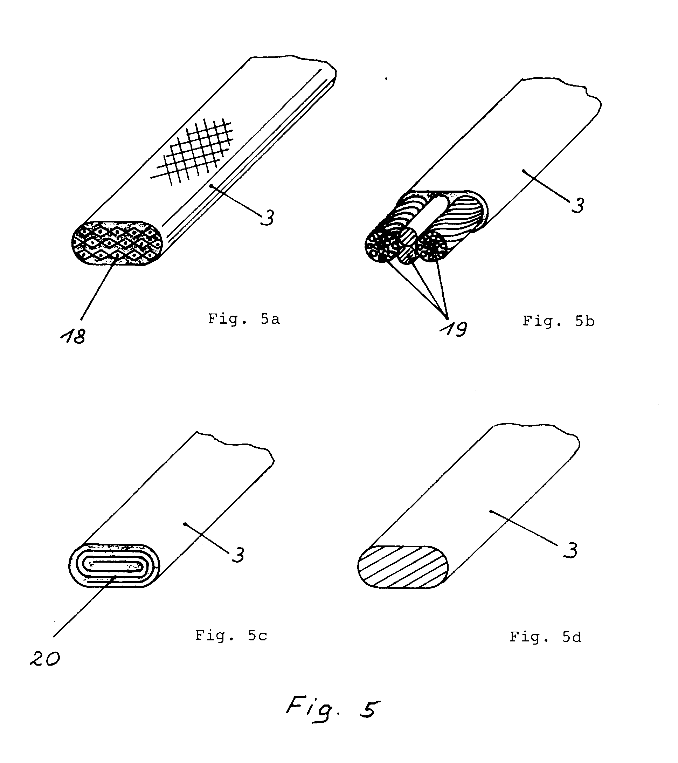

La figure 5 représente différentes structures proposées pour la réalisation des tiges de liaison 3. En 5a, la tige de liaison 3 est renforcée par une carcasse tissée noyée dans un caoutchouc dur ou une matière plastique susceptible de bien résister à la compression tout en étant souple. En 5b la tige de liaison 3 est armée par des câbles 19. En 5c la tige de liaison 3 est armée par un enroulage de toile 20. En 5d la tige de liaison 3 n'a pas d'armature, mais elle est réalisée en une matière armée de fibres coupées disposées de façon aléatoire.

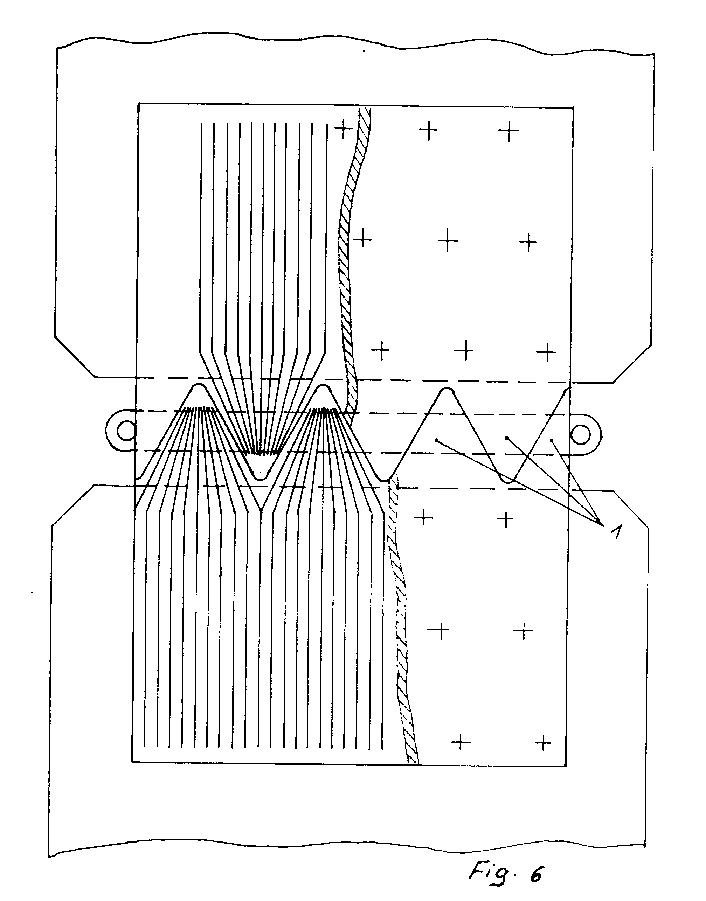

La figure 6 représente, en vue par le dessus au moins partiellement radiographique, un exemple de dispositif selon l'invention montrant l'armature interne 5, les éléments de liaison 1 imbriqués, la tige de liaison 3. On remarquera que la tige de liaison 3 est avantageusement munie à ses extrémités de trous 21 permettant de la fixer ou éventuellement de la tirer à l'aide d'un crochet ou de la pousser par son enfilage, Ces trous 21 peuvent également servir à la mise en place de goupilles de blocage.

Sur la figure 6, les éléments de liaison 1 imbriqués ont des formes triangulaires complémentaires. Du fait que le dispositif ne fonctionne pas comme une charnière, toutes les formes complémentaires sont possibles. La complémentarité des formes, si elle est parfaite, procure une certaine étanchéité au dispositif, ce qui est très appréciable dans de nombreuses applications industrielles.

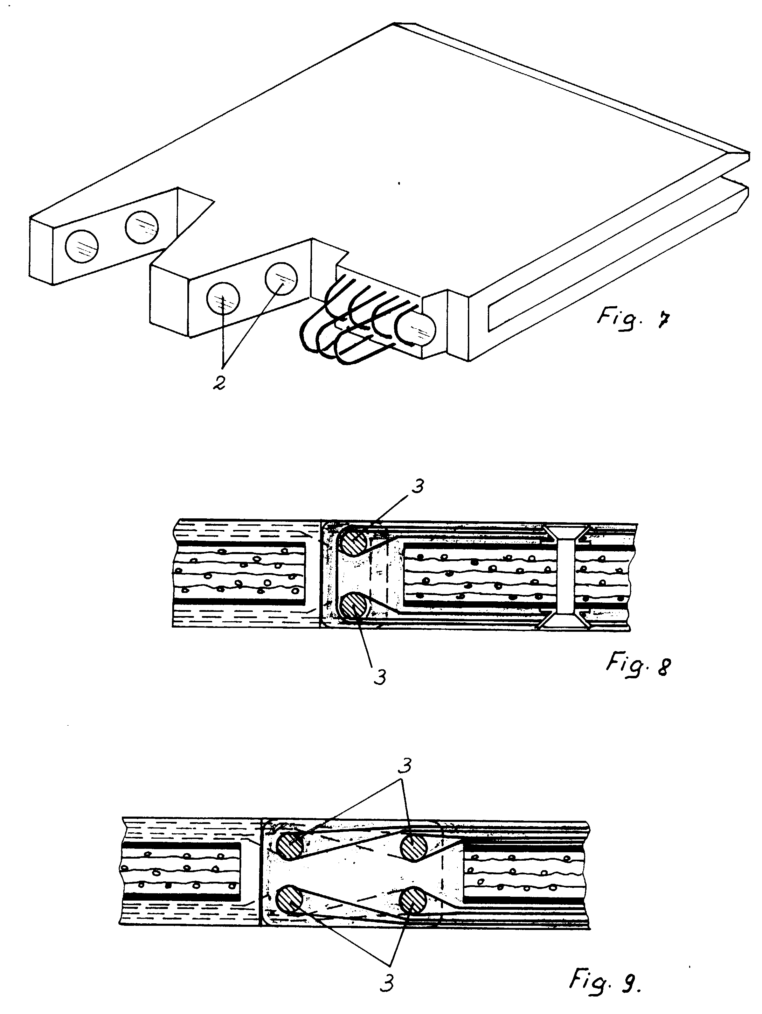

La figure 7 représente un demi-dispositif de jonctionnement dont les éléments de liaison comportent chacun deux passages ronds destinés au passage de deux tiges de liaison 3 de section transversale ronde. Du fait de la présence de deux tiges, le dispositif de jonctionnement selon l'invention n'est pas affecté par l'effet de charnière.

Les figures 8 et 9 représentent des dispositifs de jonctionnement selon l'invention comportant respectivement deux tiges de liaison et quatre tiges de liaison. Dans le cas du dispositif de jonctionnement de la figure 8 , les armatures sont en trois couches : une couche d'armature entoure le passage supérieur 2 de l'élément de liaison ; une autre couche d'armature entoure le passage inférieur 2 de l'élément de liaison et la troisième couche d'armature entoure les deux passages 2.

Dans le cas de la figure 9, il y a quatre couches d'armature, chaque couche entourant un passage 2.

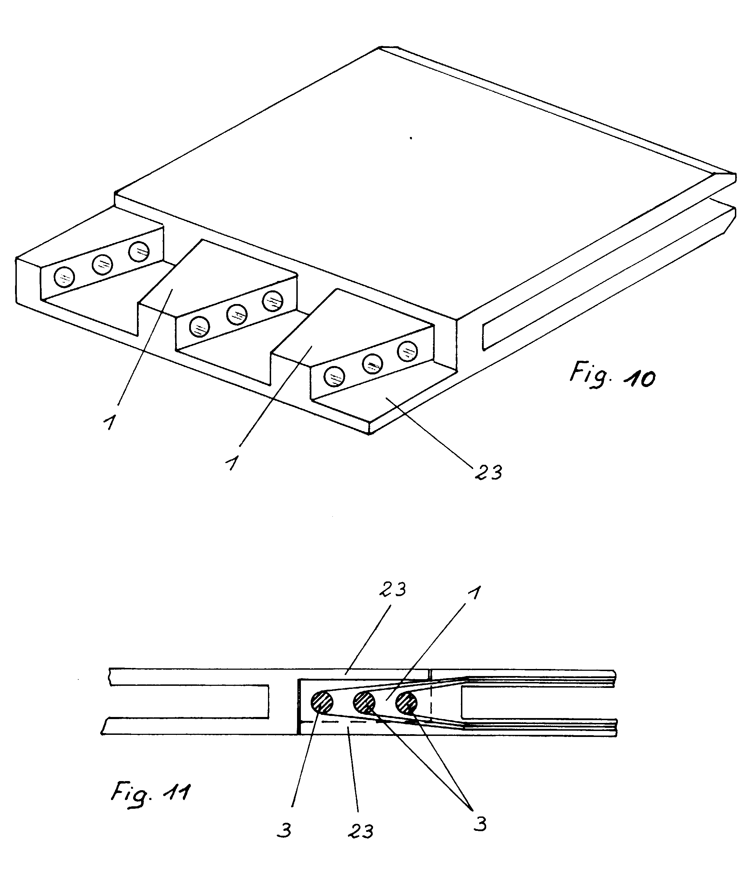

La figure 10 représente un type particulier de dispositif de jonctionnement selon l'invention sous forme d'un demi-dispositif de jonctionnement. On remarque que les éléments de liaison présentent un recouvrement 23 sur tout la longueur du dispositif de jonctionnement, un logement étant prévu de l'autre côté pour recevoir le recouvrement 23 complémentaire de l'autre demi-dispositif de jonctionnement (non représente). On conçoit que ces deux recouvrements 23 forment, avec les éléments de liaison 1 imbriqués situés entre eux, une barrière d'étanchéité à deux étages, grâce à la chicane complexe ainsi obtenue.

La figure 11 représente le dispositif de la figure 10 vu en coupe longitudinale. On observe les recouvrements 23 et la chicane qu'ils forment avec les éléments de liaison 1.

La fixation des ailes des dispositifs de jonctionnement ne s'effectue pas obligatoirement au moyen de rivets, crampons, ou d'autres éléments mécaniques traversant les ailes et la bande transporteuse. Etant donné la grande surface des ailes et du fait que leur élasticité est comparable à celle de la bande transporteuse, un collage à froid peut être réalisé, et même une vulcanisation, moins longue à realiser qu'une jonction directe par vulcanisation des extrémités de la bande transporteuse, selon l'art antérieur, peut être envisagée.

Comme on le voit d'après la description qui précède, tous les objectifs fixés pour l'invention sont atteints grâce aux divers modes de réalisation décrits.

## Revendications

1. Dispositif de jonctionnement pour bande transporteuse, constitué de deux demi-dispositifs de jonctionnement, chacun de ces demi-dispositifs de jonctionnement présentant sur l'un de ses bords extérieurs une série d'éléments de liaison aménagés pour recevoir une tige de liaison (3), ou des tiges de liaison, enfilées dans le sens transversal alternativement dans un élément de liaison (1) appartenant à un demi-dispositif de jonctionnement ; puis dans un élément de liaison (1) appartenant à l'autre dispositif de jonctionnement, et ainsi de suite, les demi-dispositifs de jonctionnement ayant été rapprochés de façon à imbriquer les éléments de liaison (1) appartenant à l'un des demi-dispositifs de jonctionnement avec les éléments de liaison (1) appartenant à l'autre demi-dispositif de jonctionnement, et présentant sur son autre bord extérieur une paire d'ailes de fixation souples (4), disposées de manière à pouvoir laisser insérer entre elles une extrémité de bande transporteuse, lesdites ailes (4) étant solidaires de la partie du demi-élément de jonctionnement qui porte les éléments de liaison (1) sur son côté opposé, lesdits demi-dispositifs de jonctionnement étant réalisés dans une matière souple et élastique, et comportant une armature intérieure (5) noyée dans cette matière souple et élastique, laquelle armature intérieure (5) s'étend dans une première aile de fixation (4), entoure sur environ 180° les parties creuses (2) des éléments de liaison (1) servant de passage aux tiges de liaison, à une certaine distance de la surface de celles-ci, ou en affleurant ladite surface, puis s'étend dans l'autre aile de fixation (4),
caractérisé par le fait que
l'armature intérieure (5) a une souplesse et une élasticité du même ordre que celles de ladite matière.

2. Dispositif de jonctionnement selon la revendication 1, caractérisé en ce que les ailes de fixation souples (4) comportent des trous de fixation des ailes de fixation qui sont chemisés par des rondelles, ou douilles (7), ou des plaquettes percées (8), incorporées dans les ailes.

3. Dispositif de jonctionnement selon la revendication 2, caractérisé par le fait que l'armature (5) est arrimée aux rondelles (7), douilles ou plaquettes (8).

4. Dispositif de jonctionnement selon la revendication 3, caractérisé par le fait qu'aux extrémités des ailes (4), des plaquettes (8) de protection sont incorporés dans les ailes, le bord desdites plaquettes (8) formant un rebord rabattu en biseau pour rejoindre la surface des ailes située à l'opposé de la surface de l'extrémité de la bande transporteuse.

5. Dispositif de jonctionnement selon l'une quelconque des revendications précédentes, caractérisé par le fait que l'armature est constituée par un tissu tricoté.

6. Dispositif de jonctionnement selon la revendication 1 comportant une armature tissée, caractérisé par le fait que le tissu constituant l'armature comporte des fils de chaîne (11) constitués par un ou plusieurs fils internes (12) enrobés dans une matière élastique, les fils de trame (13) présentant une certaine élasticité dans le sens longitudinal et étant tissés de façon lâche, avec embubage, le tissu constituant l'armature étant utilisé de façon telle que les fils de trame soient disposés dans le sens longitudinal des dispositifs de jonctionnement.

7. Dispositif de jonctionnement selon la revendication 1, caractérisé par le fait que la tige de liaison (3), ou les tiges de liaison (3), sont armées au moyen d'un enroulage de toile.

8. Dispositif de jonctionnement selon la revendication 3, caractérisé par le fait que l'arrimage est obtenu grâce à des trous qui sont ménagés dans l'armature tricotée, tissée ou non tissée, les rondelles ou douilles étant engagées dans lesdits trous ménagés dans l'armature.

## Patentansprüche

1. Förderbandverbindungsvorrichtung, bestehend aus zwei HalbVerbindungsvorrichtungen, die jeweils an dem einen ihrer Außenränder eine Reihe von zur Aufnahme einer oder mehrerer Verbindungsstangen (3) ausgestalteten Verbindungselementen (1) aufweisen, wobei die Verbindungsstangen (3) abwechselnd durch jeweils ein Veibindungselement (1) der einen Halb-Verbindungsvorrichtung und ein Verbindungselement (1) der anderen Halb-Verbindungsvorrichtung, und so fort, durchgeschoben werden, nachdem die beiden Halb-Verbindungsvorrichtungen derart in Eingriff gebracht worden sind, daß die Verbindungselemente (1) der einen Halb-Verbindungsvorrichtung sich mit den Verbindungselementen (1) der anderen Halb-Verbindungsvorrichtung verzahnen, und an deren jeweils anderen Außenrand ein Paar biegsamer Befestigungsflügel (4) vorgesehen ist, die dergestalt angeordnet sind, daß zwischen ihnen ein Ende eines Förderbands eingeschoben werden kann, und die mit dein Teil der HalbVerbindungsvorrichtung, welches auf seiner gegenüberliegenden Seite die Verbindungselemente (1) trägt, fest verbunden sind, wobei die besagten Halb-Verbindungsvorrichtungen aus einem flexiblen und elastischen Material gefertigt sind, in dem eine innere Bewehrung (5) eingebettet ist, welche sich iii einen ersten Befestigungsflügel (4) erstreckt, dann auf ca. 180° die hohlen, als Durchlaß für die Verbindungsstangen vorgesehenen Bereiche (2) der Verbindungselemente (1) in einen gewissen Abstand zu deren Oberfläche oder unmittelbar an dieser angrenzend umfängt, und sich dann in den anderen Befestigungsflügel (4) erstreckt,
**dadurch gekennzeichnet**,
daß die innere Bewehrung (5) von einer Biegsamkeit und Elastizität ähnlich denen des besagten Materials ist.

2. Verbindungsvorrichtung nach Anspruch 1, **dadurch gekennzeichnet**, daß an den biegsamen Befestigungsflügeln (4) mit Unterlegscheiben oder Hülsen (7) oder durchbohrten Plättchen (8) ummantelte Löcher zur Befestigung der Befestigungsflügel vorgesehen sind.

3. Verbindungsvorrichtung nach Anspruch 2, **dadurch gekennzeichnet**, daß die Bewehrung (5) an den Unterlegscheiben (7), Hülsen oder durchbohrten Plättchen (8) befestigt ist.

4. Verbindungsvorrichtung nach Anspruch 3, **dadurch gekennzeichnet**, daß an den Enden der Befestigungsflügel (4) in den Flügeln eingebaute Schutzplättchen (8) vorgesehen sind, deren Ränder in Form einer Schrägkante dergestalt umgeschlagen sind, daß sie die der Oberfläche des Förderbandendes gegenüberliegende Fläche des jeweiligen Flügels einfassen.

5. Verbindungsvorrichtung nach einem der Ansprüche 1 bis 4, **dadurch gekennzeichnet**, daß die Bewelrwung aus einem Strickgewebe besteht.

6. Verbindungsvorrichtung nach Anspruch 1, mit einer Webbewehrung versehen, **dadurch gekennzeichnet**, daß das die Bewehrung bildende Gewebe aus einem oder mehreren mit einem elastischen Material überzogenen inneren Fäden (12) bestehende Kettfäden (11), sowie locker und mit Verkürzung der Kettfäden verwobene Schußfäden (13) von gewisser Elastizität in Längsrichtung aufweist, wobei das die Bewehrung bildende Gewebe derart eingesetzt wird, daß die Schußfäden in Längsrichtung der Verbindungsvorrichtungen orientiert sind.

7. Verbindungsvorrichtung nach Anspruch 1, **dadurch gekennzeichnet**, daß die Verbindungsstange (3) bzw. -stangen (3) mit einer Tuchumhüllung versehen sind.

8. Verbindungsvorrichtung nach Anspruch 3, **dadurch gekennzeichnet**, daß die Befestigung durch in der gestrickten, gewebten oder nicht gewebten Bewehrung vorgesehene Löcher und Einführung der Unterlegscheiben bzw. Hülsen in die besagten Löcher gewährleistet ist.

## Claims

1. Joining device for conveyor belt, made up of two halves joining devices, each one of these halves joining devices presenting on one of its internal edges a series of linking elements arranged for receiving a linking stem (3) or linking stems, threaded across transversally, alternatively in one linking element (1) belonging to one half joining device; then in one linking element (1) belonging to the other joining device, and so on, the half joining devices having been brought close to each other in such a way as to interleave the linking elements (1) belonging to one of the half joining device with the linking elements (1), belonging to the other half joining device, and presenting on its other external edge a pair of flexible fastening arms (4), arranged in such a way as to allow the insertion between these arms and end of the conveyor belt, the said arms (4) being solidly attached to the part of the half joining element which carries the linking elements (1) on its opposite side, the said half joining devices being made of a flexible and elastic material and comprising an internal reinforcement (5) embedded in a flexible and elastic material, the said internal reinforcement (5) extends in a first fastening arm (4), surrounds over approximately 180° the hollow parts (2) of the linking elements (1) used as passage to the linking stems, at a certain distance of the surface of this latter, or flush levelled with the said surface, then extends in the other fastening arm (4), characterised by the fact that the internal reinforcement (5) is of same range of flexibility and elasticity than those of the said material.

2. Joining device according to claim 1, characterised by the fact that the flexible fastening arms (4) comprise fastening holes for the fastening arms, which are lined by washers, or by sockets (7) or by small drilled plates (8) incorporated into the arms.

3. Joining device according to claim 2, characterised by the fact that the reinforcement (5) is trimmed to the washers (7) or to the sockets or small plates (8).

4. Joining device according to claim 3, characterised by the fact that at the ends of the arms (4) small protective plates (8) are incorporated into the arms, the edges of the said small plates (8) forming a bevelled bent down rim, to meet the arms surface located opposite to the surface of the end of the conveyor belt.

5. Joining device according to anyone of the preceding claims, characterised by the fact that the reinforcement is made up of a knitted fabric.

6. Joining device according to claim 1 comprising a woven reinforcement, characterised by the fact that the fabric which makes up the reinforcement comprises warp threads (11) made up of one or several internal threads (12) embedded in an elastic material, the weft threads (13) presenting longitudinally a certain elasticity and being woven loosewise, and loosened with respect to the warp threads, the reinforcement fabric being used in a way such as the weft threads are arranged in the longitudinal direction, with respect to the joining devices.

7. Joining device according to claim 1, characterised by the fact that the linking stem (3) or the linking stems (3) are reinforced by means of a wrapping canvas.

8. Joining device according to claim 3, characterised by the fact that the trimming is obtained, thanks to holes provided in the knitted, woven or unwoven reinforcement, washers or sockets being engaged in the said holes provided in the reinforcement.
